# EUROPEAN PATENT APPLICATION

(11) **EP 1 172 728 A2**
(43) Date of publication of application: **16.01.2002**
(21) Application number: 01305625.4
(22) Date of filing: 28.06.2001
(51) Int. Cl.: G06F 9/455

(54) **Information management engine and method**

(30) Priority: 13.07.2000 US 615593
(71) Applicant: STORAGE COMPUTER CORPORATION, Nashua, New Hampshire 03062 (US)
(72) Inventor: Barillas-Trennert, Gustavo, Litchfield, NH 03052 (US); Velez-McCaskey, Ricardo E., Nashua, NH 03062 (US); Clark, Dana S., Tweksbury, Massachusetts 01876 (US)
(74) Representative: Watts, Peter Graham

(57) **Abstract**

The invention provides an information management engine and method for increasing the bandwidth and functionality of processors and operating systems by removing the data acquisition and delivery functions of the application layer or application server of a processing system. The novel information management engine and method utilizes a plurality of asynchronous modules providing one or more parallel links for asynchronously providing for the bidirectional transfer of data and capability with a variety of operating systems.

The novel information management engine includes a front end manager module for receiving and converting commands into a common format, an object server module for creating object tasks for each data object and a configuration manager module that provides for the definition of virtual objects for the object server module. The novel information management engine includes optional modules such as an application manager module, a back end manager module and a virtual storage manager module and native GUI.

The novel information management engine provides a transparent interface which is particularly useful in streaming data applications where the novel information management engine is combined with a gateway connected to the Internet backbone and with a SAN or Storage Area Network to remove application server bottlenecks and provide a real time information management system.

## Description

### COPYRIGHT NOTICE

A portion of the disclosure of this patent document contains materials which is subject to copyright protection. The copyright owner has no objection to the reproduction of this patent document or any related materials in the files of the United States Patent and Trademark Office but otherwise reserves all copyright rights whatsoever.

### BACKGROUND OF THE INVENTION

### 1. Field Of The Invention

The invention pertains to an intelligent information management engine and method for providing for the efficient transfer of data between processors that adapts to existing and emerging hardware and hardware devices by assimilating their capabilities. More particularly, the invention pertains to software which increases the functionality and performance of the host hardware and/or devices hardware by providing a transparent interface between the host hardware and devices hardware utilizing a system of functionally independent modules that provide for the efficient bidirectional transfer of data between the host hardware and the devices hardware.

The modules of the novel information management engine operate asynchronously of each other so that multiple data transfer requests can be satisfied concurrently through the transparent interface provided by the novel software. The novel software includes at least three functionally independent modules which include a front end manager module, an object server module and a configuration manager module. In the best mode of the invention a back end manager module is added to initiate a task for each bus adaptor connected to the backplane and a real time operating systems (RTOS) module which can utilize either existing software in the host hardware or devices hardware or can utilize software constructed in the best mode of the invention.

In the preferred application of the invention the front end manager module, object server module, configuration manager module, back end manager module is combined with an application manager module, a virtual storage manager module and native graphic user interface module to form an information management engine and method that not only provides a transparent interface between the host hardware and devices hardware but also provides icons for a screen display to assist the operator in achieving the maximum functionality and performance from the host hardware and devices hardware. The novel information management engine and method utilizes parallel processing making maximum use out of the host hardware and devices hardware by replacing the hardware in the applications manager with a transparent software systems interface to provide greater functionality and to obtain greater processing efficiency from the host hardware and the devices hardware.

The novel information management engine and method of the invention provides particular advantages in streaming data applications across the Internet and Intranets by removing the data acquisition and delivery segment from the application server and replacing the normal hardware used in the application server for data acquisition and delivery with software that employs many parallel paths to accelerate performance of the system. Further, by replacing the hardware utilized for data acquisition and delivery from the application layer or server with software that provides multiple parallel paths for the bidirectional flow of data and by an increase in the number of parallel paths the limit of bandwidth of the newest bus architecture can be immediately utilized without the limitations inherent in application servers relying upon hardware in the application server for acquiring and delivering data.

### 2. Description Of The Related Art Including Information Disclosed Under 37 CFR 1.97 and 1.98

Conventional prior art has relied upon the multipurpose application server and associated hardware in the multipurpose application server for data acquisition and delivery. The multipurpose application server or application layer of the processor also has many other tasks which make the application server a bottleneck in the system which slows down the flow of data. The novel information management engine and method of the invention removes data acquisition and delivery function from the application server and provides multiple parallel paths to accelerate performance of the host hardware and devices hardware to increase functionality and performance of the overall system by utilizing the transparent interface of the novel information management engine and method of the invention. In the preferred application of the invention the application server is modified to merely pass instructions and receive acknowledgment which involves only insignificantly small bits of data while the novel real time information management engine of the invention streams large blocks of data to their intended destination for their intended functions without being limited to the traditional bottleneck of the application server and its reliance upon dated hardware modules and systems that constrain the movement of streaming data across the Internet, Intranets and interfaces between the host hardware and devices hardware.

The application layer or application module in the ISO/OSI (International Organization for Standardization/ Open Systems Interconnection) model for standardized computer communications handles communications at the application program level, such as file transfer or remote access to a computer host hardware and the modules for data acquisition and delivery. These host computer hardware modules have been in the form of homogeneous cards that traditionally cost between 2 million and 30 million dollars to develop and which are generally sold at from between $500 to $20,000. These hardware cards in the application server or application layer at the high end include memory, a central processing unit, SCSI technology with fans, case, motherboard and bus are not only expensive to develop but also are limited to homogeneous systems and are unable to react to rapid changes in hardware and technology without repeating the process of developing new hardware to handle advances in technology.

For example, where a technological advancement is made, such as a faster chip set, higher bandwidth buses, or fibre interfaces the conventional prior art must make a change in each or all of the application server hardware modules to accommodate some or all of the advances in technology. This change in the application server hardware requires time to design, produce, test and release for sale in the anticipation of a sales cycle long enough to recuperate engineering, tooling and production cost before obsolescence requires a repeat of the process due to further advances or changes in technology.

In contrast to the prior art the novel information management engine and method of the invention provides a transparent software based data acquisition and delivery engine and method that frees the application server from the data acquisition and delivery function and allows the software to provide a transparent interface for managing the flow of information and data. The novel information management engine and method of the invention provides many parallel paths and, unlike the prior art hardware cards, the novel software can accommodate homogeneous or heterogeneous systems and can be either a host or a target in providing multiple parallel paths for the flow of information for a transparent interface. Unlike the prior art data controllers that are based upon hardware in the application server, the novel information management engine and method of the invention is based on software that manages data to obtain the broadest bandwidth and increase the performance of host hardware and devices hardware.

In recent years the prior art has utilized software to assist in moving data between primary and secondary storage systems within a computer system or between networked computers. Representative of such prior art is Kao U.S. Patent No. 5,313,631 which provides a software data management system which utilizes a statistical analysis for determining the amount of use within a given period of time to provide for the migration of files between primary and secondary storage while creating symbolic links to increase the speed of the operating system software. Kao U.S. Patent No. 5,313,631 does not remove the data acquisition and delivery bottleneck in the application server from the other tasks of the application server to accelerate performance of the entire system. The software solution of Kao U.S. Patent No. 5,313,631 is directed merely to a software storage application at the data storage end of the system and provides a migration device for migrating files between primary and secondary storage devices and does not provide a transparent interface between the host hardware and devices hardware to increase bandwidth and performance of the application layer or application server of the processor.

Prior art such as Schafer, et al. U.S. Patent No. 6,065,100 and Tzelnic, et al. U.S. Patent No. 5,944,789 provide various types of caching apparatus and methods for retrieval of data to speed up the movement of data between storage devices and host hardware. These caching devices, like the software of Kao U.S. Patent No. 5,313,631, pertain to expediting the movement of data at the storage end of the system and do not provide a transparent interface in the application layer or application server to provide a software system that removes the bottleneck between the host hardware and the devices hardware to increase the functionality and speed of the computer processing system. More particularly, neither Schafer, et al. U.S. Patent No. 6,065,100 nor Tzelnic, et al. U.S. Patent No. 5,944,789 provide a real time operating system that removes the data acquisition and delivery functions from the application server by utilizing an asynchronous modular information engine to increase the functionality and speed of the operation of the entire system.

Van Huben, et al. U.S. Patent No. 5,966,707 pertains to a data management application having a plurality of data managers in one or more layers of a layered architecture that manipulates databases. Van Huben, et al. U.S. Patent No. 5,966,707 provides a virtual control repository having one or more physical heterogeneous repositories and provides for storing, accessing and tracking data residing in one or more data repositories managed by the virtual control repository. The data management system of Van Huben, et al. U.S. Patent No. 5,966,707, like the other known prior art, does not remove the bottleneck of the application layer or application server by isolating the data acquisition and delivery segment from the application server to reduce the number of tasks of the application server and to provide many parallel paths to accelerate the performance of the entire system.

Van Huben, et al. U.S. Patent No. 5,966,707, like Ault, et al. U.S. Patent No. 6,065,019, all provide for a data management applications for management of data in tiers in which the data is manipulated as part of the storage management system and not as an intelligent platform which increases capacity and bandwidth by rapidly moving data and removing the bottleneck of the application layer or application server.

The invention, unlike the prior art, provides an information management engine and method that assimilates the capability of the operating systems to increase functionality and provide superior performance by adapting the personality of each of the individual host hardware and devices hardware while providing a transparent interface to increase the functionality and performance of the host hardware and devices hardware. The novel information management engine and method is entirely software based and therefore cooperates with the existing hardware and software in the application server by removing the data acquisition and delivery functions of the application server to free up the application server in the host hardware devices.

In freeing up the application server the novel software based information management engine and method of the invention increases speed, functionality and performance while fully assimilating and utilizing all of the benefits of the host hardware and devices hardware to increase speed, adapt to the most recent changes in hardware to provide a real time information management engine and method to provide maximum bandwidth and performance from 'off the shelf' host hardware and devices hardware without the limitations of the hardware specific approach to the application layer or application server of the prior art.

### SUMMARY OF THE INVENTION

In the ISO/OSI model (International Organization for Standardization/Open Systems Interconnection Model) a layered architecture or plan is provided that standardizes levels of service and types of interaction for computers exchanging information through a communications network. The ISO/OSI model separates computer to computer communications into 7 layers or levels each building upon the standards contained in the levels below it. The application server or application layer is the highest of the seven layers in the ISO/OSI model for standardizing computer to computer communication. The application server has a multitude of functions in performing everything from file sharing, print job spooling and electronic mail to database management, program to program transfer of information, text formatting and display, code conversion, database management and accounting as well as establishing, maintaining and coordinating communication for the computer system.

Some of the functions of the application server, such as file transfer protocols work from the application layer but do the jobs assigned to the lower layer. This is similar to a situation where the president of the corporation is sometimes personally assigned the task of cleaning the windows. Such a variety of tasks and responsibilities of the application server operates as a bottleneck to the efficient operation of the overall computer system by resulting in delay and constrain the rapid utilization of the processing power of the computer. The application server bottleneck in the highest of the seven layers of the ISO/OSI model is further compounded by the hardware specific nature of the application server, such that advances in technology, such as faster chip sets, higher bandwidth buses, or fibre interfaces require the hardware based application server to be modified to accommodate such advances in technology.

Such advances in technology in many cases result in the obsolescence of the computer, simply because the application server is obsolete or requires too much reconfiguration or construction to utilize current technology. The limitations of the application servers multitude functions as well as limitations inherent in a hardware based system are particularly apparent, where fast delivery of data, such as in streaming data applications over the Internet and Intranets are involved. In streaming data the acquisition (writing and/or delivery)(reading of large contiguous blocks of information such as VOD (Video On Demand), high capacity web servers, e-commerce web servers, online training through video, medical imaging, high speed printing, data vaulting, video teleconferencing and other applications require extremely high data rates in the range of Megabits per second to Gigabits per second in data streaming technology (DST).

In DST and particularly along the information superhighway (I-way) a server computer and a client computer communicate with one another in a world where digital information is measured in Megabytes per second (MB/s) or input outputs per second (IO/s). In this IO/s and MB/s arena a person's bank balance is updated, inventory is adjusted, manufacturing scheduled, an accounting balance is tabulated in the IO/s or Mb/s world and massive (relative to tiny bits of information written and read in the IOs world) contiguous blocks of data are read and written.

In such a world the application server in the client and server computer, the utilization of the novel information management engine and method of the invention provides greater bandwidth or increased capacity for both the client and server computer since both client and server computer can simultaneously be an initiator or target and additional parallel data paths are opened to those computers to operate at greater speed and efficiency utilizing the novel information management engine and method of the invention. The novel information management engine and method in both computers provides often a fourfold performance improvement or more which creates an environment in both the client and server computer that adds many parallel data paths which the novel information management engine manages as a single data path.

The increase in performance is linear so that, with an 80 Megabytes per second (MB/s) data stream, Ultra 2 data paths, a data rate of 237 Megabytes per second (MB/s) can be achieved. By balancing the multiple parallel paths between data flowing and out and by increasing the number of parallel paths in the novel information management engine and method the streaming data can achieve the limits of the bandwidth of the newest bus architecture. Therefore, while the prior art utilizes a single system sustained speed of about 180 Megabytes per second (MB/s), the single system sustained speed of the novel information management engine and method is 237 Megabytes per second (MB/s).

The novel information management engine also provides the facility to integrate not only homogeneous and heterogeneous systems but also to increase the performance of the systems by removing the bottleneck of the application server. This results in a system being four times as fast, and, at other times, two or three times as fast, and in some cases forty percent to 50 percent faster, but in all cases always faster than existing hardware systems due to the removal of the data acquisition and delivery tasks from the application server as well as parallelism which provides greater functionality and capacity in all client and server computers such as between computer networks in the Internet and Intranets but also in dedicated systems such as a computer and its peripherals by removing the bottleneck of the application server.

The advantages of the invention are achieved by providing an information management engine which operates as a platform and not a database for managing data traditionally managed by the application server. The novel information management engine utilizes parallelism to achieve higher performance with the ability to work with homogeneous and heterogeneous systems by converting data into an internally consistent data format. As a result the novel information management engine and method can be connected to one host computer or many host computers through such diverse connections as SCSI (Small Computer Serial Interface) and OCI (Optical Carrier Interconnect) so that the novel software can operate on both high and low level nodes.

The novel information management engine and method is designed to operate at 230 Megabytes (MB/s) and up to 460 Megabytes per second (MB/s) or greater depending upon the processing power of the computer. With a given processing power the novel information management engine is able to handle a greater capacity of data at greater speeds and provide greater bandwidth than existing systems by providing a transparent interface which removes the data acquisition and delivery function from the application server in the application layer of the computer and transfer it to the novel information management engine.

The advantages of the novel information management engine and method are achieved by utilizing the method of the invention by removing the data delivery and acquisition function of the application server in the application layer of the computer and placing that responsibility with a novel information management engine. The novel information management engine and method of the invention utilizes an entirely software based system of functionally independent modules that provide for the efficient bidirectional transfer of data between the host hardware and the devices hardware.

The functionally independent modules operate asynchronously of each other so that multiple data transfer requests can be satisfied simultaneously. The novel information management engine and method include at a minimum a front end manager module, an object server module and a configuration manager module. The front end manager module translates requests from the host hardware and submits them to the other modules in the novel information management engine. The front end manager module provides a transparent interface between the host card whether that interface is SCSI, fibre channel, OCI (Optical Communications Interconnect) or other NIC (Network Interface Card) which connects to the host hardware and accepts commands via such interface. The front end manager module converts data into an internally understandable or internally consistent request for the object server module. The novel front end manager module preferably operates as a target instead of acting as a host. In accordance with the preferred embodiment of the invention the novel front end manager module can operate as a target to communicate with the host in transmitting data to the object server module.

The object server module of the novel information engine and method receives a command from the front end manager module and deciphers the command and coordinates all activities necessary to complete the request. The object server may interact with other optional modules in the information management engine to complete the command from the front end manager module or other optional modules in the novel information management engine.

The novel information management engine also includes a configuration manager module which defines data objects that are presented to the host from the front end manager module and from the object server module. For example, the configuration manager module could present a group of drives as a single drive to the host or perform storage data reconstruction on the fly, RAID or other functions. The configuration manager module receives a request from a variety of front end manager module interfaces which can be an RS 232 serial link, parallel SCSI with vendor specific commands or a network interface such as ATM (Asynchronous Transfer Mode) or Ethernet. The front end manager module, object server module and configuration manager module form the core modules of the novel information management engine. Other modules may be added and are utilized in accordance with the preferred embodiment and best mode of the invention.

The most important of the additional optional modules are the back end manager module which controls hardware devices, controller adapters and hardware controllers alone or in combination with each other that determine which disk the data goes to or comes from. The operation of the back end manager module can be achieved by utilizing either software proprietary to the invention which will be described hereinafter in greater detail or prior art software already in place in the prior art operating systems of the processor.

The novel information management engine and method also preferably utilizes an application manager module which allows the system to have a particular functionality and it allows the novel information management engine to perform specialized operations on the data objects. Applications such as backup, HSM (Hierarchical Storage Management) and archiving can be implemented by the application manager module without taxing the attached servers with their I/O (input/output) intensive tasks. A file system application connected to the network can provide a network attached storage (NAS) solution or a SAN solution. A storage area network (SAN) application which would make a novel information management engine a SAN information management engine.

The application manager module can be tailored such that the data it delivers or receives can be efficiently extracted from data objects to meet specific needs of the application. Since the application manager module is completely asynchronous of the other modules it can receive two types of requests through its front end tasks, for example, configuration and data. If the application manager module receives a request to configure a data object, it goes through the configuration manager module to the object server module. Otherwise the data can go directly to the object server module. The novel application manager module allows multiple heterogeneous servers to access and share in heterogeneous and homogeneous systems, such as Windows, LINUX, etc. and allows heterogeneous file systems a capacity of 100 Megabytes per second (MB/s) loop or a 10 Megabytes per second (MB/s) loop to provide greater functionality. The systems could be a SAN, HSM (Hierarchical Storage Management) or other type of operating system.

The novel information management engine and method also in the preferred embodiment includes a virtual storage manager module which can provide quick access to certain types of information. In essence the virtual storage manager module operates as a cache for the system and interfaces with the application manager module and the object server module. Depending upon an algorithm the virtual storage manager module determines whether certain data stays in the cache or is moved from the cache to one or more of the existing storage devices. The virtual storage manager module serves as an operating system for determining the position of data based on use as well as to whether certain data should have a mirror system and whether certain data should be mirrored in the cache.

The novel information management engine and method also includes a native GUI (Graphic User Interface) module which allows the user to talk to the front end manager module and provides graphic images as to the operation and utilization of the novel information management engine and method of the invention.

Due to its architecture the novel information management engine and method of the invention results in high performance, flexibility and adaptability to various homogeneous and heterogeneous operating systems. The novel information management engine and method serves as a data arbitrator and integrator between multiple heterogeneous and homogeneous host connections such as fibre channel, ATM, SSA (Serial Storage Architecture), SCSI, Ethernet, etc. The novel information management engine and method also serves as a data arbitrator and integrator for multiple heterogeneous storage device connections such as RAID, SCSI, tapes, jukeboxes, etc. In addition the novel information management engine and method of the invention provides a broad range of data and device management applications, such as backup NAS, SAN, etc.

The novel information management engine maintains hardware independence and the novel information management engine can be equipped with different hardware to perform different tasks. It may be used to integrate a RAID subsystem to a network or a tape array to a SCSI host since different heterogeneous hardware is controlled by the modules of the information management engine. The novel information management engine utilizes parallel architecture based on a multitasking realtime operating system to make certain that the utilization of each of the hardware resources available within a particular system is maximized.

The novel information management engine provides for transparent interfaces between the host hardware and the devices hardware utilizing a plurality of asynchronous modules providing a parallelism so that a functionally independent task can be plugged in to take advantage of new technology without requiring an upgrade of the software as new technology and hardware is made available. As hardware modules are added a hardware specific handler is activated to control the device. Each device becomes a part that is tied into the novel information management engine and communications network which forms a solution that adapts to the requirements of the host hardware and devices hardware in the system. As a result the novel information management engine and method provides high performance and bandwidth and I/O capability as well as high performance RAID and network attached storage (NAS) capabilities. The novel information management engine provides ease of adaptability to new hardware technologies and a simplified support for complex storage devices such as robotics, DAT (Digital Archiving Tape), DLT (Digital Library Tape), etc.

### BRIEF DESCRIPTION OF THE DRAWINGS

The features and advantages of the invention will be more fully discussed in the Detailed Description Of The Invention in conjunction with the following figures which assist in illustrating the principles and embodiments of the invention in which:
FIG. 1 is a block diagram of a functional overview of the novel information management engine and method of the invention;
FIG. 2 is a block diagram illustrating the modular architecture of the novel information management system of the invention;
FIG. 3 illustrates an embodiment of the novel information management engine of the invention;
FIG. 4 is a diagrammatic illustration of the novel information management engine of the invention in its best mode;
FIG. 5 is a diagrammatic illustration of other possible configurations of the novel information management engine illustrating the parallelism in accordance with the invention;
FIG. 6 is a block diagrammatic view of an illustration of a demonstration of the operation of the novel information engine of the invention;
FIG. 7 is an illustration similar to FIG. 5 illustrating additional configurations utilizing the parallelism of the novel information management engine of the invention;
FIG. 8 is a diagrammatic illustration of the novel information management system of the invention in accordance with the best mode of the invention;
FIG. 9 is a diagrammatic view of the application of the novel information engine in a NAS/SAN support embodiment;
FIG. 10 is the diagrammatic illustration of the application of the novel information management system in a storage application in accordance with the invention;
FIG 10A is a diagrammatic view of an application of the novel information management engine in a SWANs embodiment;
FIG. 11 is a diagrammatic view illustrating an integration of the novel information management engine in the application server or application layer of the computer;
FIG. 12 is a diagrammatic illustration of the integration of the novel information management engine using RAIDS 960;
FIG. 13 is a diagrammatic illustration of the novel information management engine utilizing a serial PCI controller;
FIG. 14 is a diagrammatic illustration of the nature of the host independent nature of the novel information management engine of the invention;
FIG. 15 is a diagrammatic illustration of the clustering video servers utilizing a SAN embodiment of the novel information management engine;
FIG. 16 is a diagrammatic illustration of the major data structures of the novel information management engine;
FIG. 17 is a diagrammatic illustration of the command flow of the novel information management engine in accordance with a preferred embodiment of the invention;
FIG. 18 is a diagrammatic illustration similar to FIG. 17 depicting the tasking objects flow of the novel information management engine in accordance with a preferred embodiment of the invention;
FIG. 19 is a diagrammatic illustration of the data flow in the novel information management engine in accordance with a preferred embodiment of the invention;
FIG. 20 is a diagrammatic illustration of the hardware architecture that may be connected to the novel information management engine;
FIG. 21 is a diagrammatic illustration of the I/O data flow controlled by the novel information management engine;
FIG. 22 is a diagrammatic illustration of the operation of the command and data transfer structure in the novel information management engine and method of the invention; and
FIG. 23A, 23B, 23C, 23D and 23E are flow charts illustrating the operation of the novel information management engine and method in accordance with the best mode of the invention.

### DETAILED DESCRIPTION OF THE INVENTION

Information technology (IT) requires large amounts of data to be moved as efficiently and quickly as possible. This quick and efficient movement of data as opposed to the movement of people requires the delivery of data in the most efficient manner possible to make use of a given processing power of a computer. Information technology communication at lower levels involves delivery of word or sound, but at higher level it requires pictures and action visual images along with sound and interactivity to communicate in the most efficient manner. The mind boggling amount of information that is transferred through networks in the I-way (Information Superhighway), LANs (Local Area Networks), WAN (Wide Area Networks) are slowed to a trickle when the I-way reaches the rural country roads of the network servers in the application layer of the computer.

The narrow bidirectional rural road that leads through the application layer of the application server limits the amount of digital data that can be transferred between the I-way and a client computer. The same analogy or problem exists but on a smaller scale where a computer is connected to a large number of peripherals especially where the digital data requirements and capacities of the peripherals are greater than the capacity of the application server of the microprocessor. The invention is applicable to all client server processor applications and networks by providing an information management engine and method for removing the acquisition and delivery of data from the application server or application layer of the computer and opening multiple parallel links between the client and server processors to enhance the functionality and capacity of a processor system having a given processing power.

The novel information management engine and method of the invention is entirely software based and, as a result, is not limited to the hardware limitation of prior art hardware based application servers. The novel information management engine and method of the invention removes the application server as a bottleneck to the flow of data and, in real time, manages the flow of thousands of streams of data to and from data tools to increase performance throughput and bandwidth of the best available hardware technologies.

The novel information management engine and method of the invention provides a software kernel that supports all standard interfaces and can readily accept upgraded technologies or new technologies as they are introduced into the market. The novel information management engine and method of the invention removes from the application server the data acquisition and delivery responsibilities and utilizes one or more parallel paths to accelerate performance. The existing application server is then allowed to take care of the users and their regular applications while the novel information management engine manages the acquisition and delivery of data so that, in the optimal situation, the only interaction and involvement of the application server is to pass an instruction and receive an acknowledgment from the novel information management engine while the novel information engine streams huge blocks of data to their destination: either a set of disk drives; a printing press; TV screen; medical monitor; screening display or other device which stores, receives, utilizes or processes digital data.

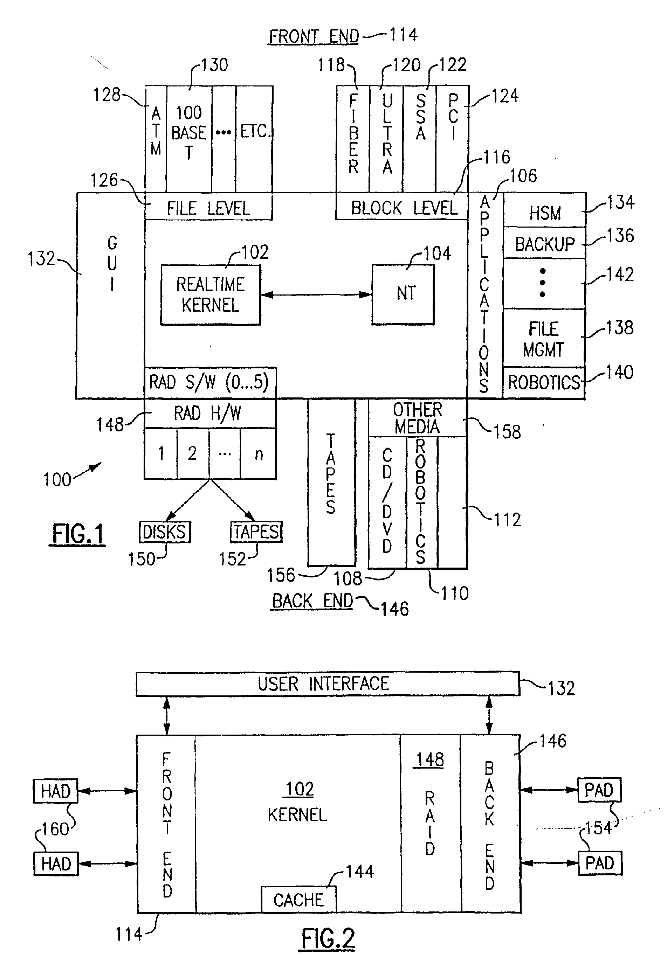

Referring now to FIG. 1 a functional overview of the novel information management engine 100 having a real time kernel 102 is illustrated. The novel information management engine 100 provides a real time software kernel 102 that implements multiple parallel pipes, utilizes the full bandwidth of standard buses, supports clusters of devices, enables the immediate deployment of new hardware technologies and substantially increases sustained streaming data performance over units without the novel information management engine 100. The real time software kernel 102 removes the data delivery and acquisition responsibilities of the application server 104 which, for purposes of the illustration in FIG. 1 is a Windows NT operating system that interfaces with the application layer 106 of the processor. Windows NT supports up to four Gigabytes of virtual memory and can run MS-DOS, POSIX (a portable operating system interface based on UNIX) and OS/2 (a protected mode, virtual memory, multitasking) operating systems.

Other application servers may be utilized with the real time software kernel 102 such as Microsoft OS or a Sun OS or other operating systems in which the novel information management engine 100 takes control of the acquisition and delivery of data from the application server from its inception to its conclusion. This is particularly advantageous in time dependent situations, such as video represented by CD/DVD block 108 or other VOD (Video On Demand) applications.

Other applications involving time dependent digital data include robotics represented by block 110 which could include high speed printing (double-sided and synchronized for multiple print-heads), various types of manufacturing and control of assembly line procedures or other computer controlled robotic systems. In addition other media applications, such as telemetry, medical imaging and other educational, business or scientific applications are represented by block 112.

The novel information management engine 100 offers from a forty percent increase to a fourfold increase in performance by adding many parallel data paths which the novel information management engine manages as one by balancing the multiple parallel paths between data flowing in and data flowing out to insure that the data flow pushes the limit of the bandwidth of the bus architecture that exists in the hardware of the application layer 106. In addition, when changes are made to the application layer hardware 106, the novel information management engine continues to push the limit of the bandwidth of the newest bus architecture by utilizing the multiple parallel paths as will be discussed hereinafter in greater detail.

Referring now to FIGs. 1 and 2 the front end 114 on the block level 116 may be linked to other systems by a fibre 118 interconnection for providing about 100 Megabytes per second (MB/s) data flow or an Ultra 120 connection providing three SCSI links to provide a capacity of 160 Megabytes per second (MB/s). A SSA 122 (Serial Storage Architecture) or a PCI 124 (Peripheral Component Interconnect) may also be utilized for other components connected to the block level 116 which interfaces with the real time software kernel 102. The front end 114 may also include a file level component 126 that may respond to an ATM 128 (Asynchronous Transfer Mode) device or a 100 base T 130 device or any other number of devices connected to the file level component 126 of front end 114 which interfaces with real time software kernel 102 of information management engine 100. A graphic user interface 132 may also interface with the real time software kernel 102 which may also include a native GUI (Graphic User Interface) of the novel information management engine as will hereinafter be described.

The application layer 106 may include HSM (Hierarchal Storage Management) 134, backup 136, file management 138, robotics 140 or other application as represented by block 142 which interface with the real time kernel 102 of the novel information management engine 100. Real time software kernel 102 may include a software based cache 144 which is a module within the novel information management engine 100 as will be described hereinafter in greater detail.

The novel information management engine 100 as illustrated in FIG. 1 includes a transparent interface to back end 146 and may include a multiple fibre/Ultra 3 SCSI RAID controller 148. RAID controller 148 may also include a variety of data storage devices including disks 150, tapes 152 or other types of storage devices. Back end 146 may also be connected to a plurality of PAD's 154 (Peripheral Adaptor Devices) which may control data storage tapes 156 or other media devices 158 (FIG. 1). The back end 146 may also include JBODS (Just A Bunch Of Disks).

The front end 114 may also be connected to a variety of HAD (Host Adaptor Device) 160 such as are connected to the novel information management engine 100 through a transparent interface for managing the acquisition and delivery of data.

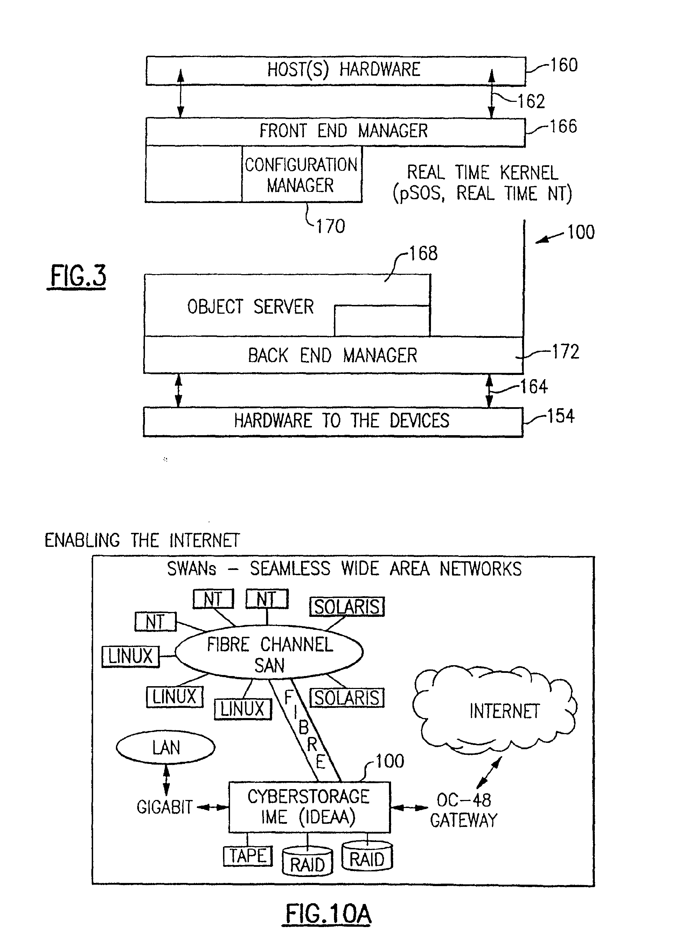

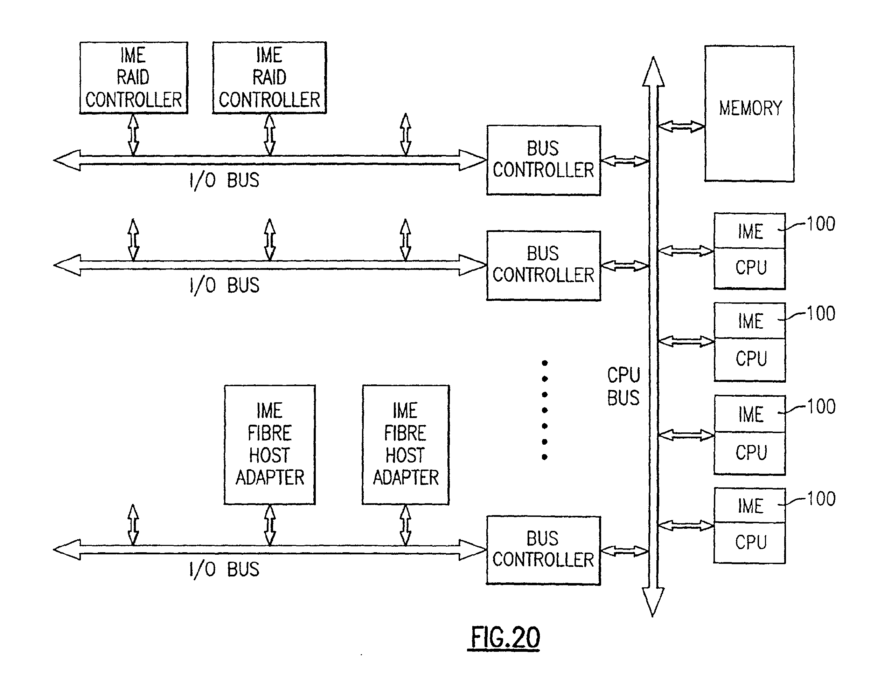

Referring now to FIGs. 1, 2 and 3, an example of an embodiment of the novel information engine is illustrated showing the transparent connection 162 between the host hardware or HAD 160 and the front end manager module 166 of the novel information management engine 100 and the transparent interface connection 164 between the back end manager module 172 to the PAD or Hardware to Devices 154 in accordance with an embodiment of the invention.
The transparent interface 162 between the HAD or host hardware 160 as well as the transparent interface 164 between the PAD or peripheral adaptor device 154 defines the transparent interfaces between the novel software based information management engine 100 provided in one or more of the CPU's 99 (Central Processing Units) and the hardware architecture as illustrated in FIG. 20.

Referring again to FIGs. 1, 2 and 3 the novel information management engine 100 includes a front end manager module 166 which provides a transparent software connection between the host hardware 160 and the front end manager module 166. The front end manager module 166 accepts commands via the transparent interface 162 such as Read, Write or Read-To-File, Write-To-File, etc. These commands are converted in the front end manager module 166 into internally understandable request for the other synchronous or asynchronous modules of the novel information management engine 100.

The novel information management engine includes the basic core modules of a front end manager module 166, an object server module 168 and a configuration manager module 170. The object server module 168 receives internally understandable commands from the front end manager module 166 and deciphers those commands to determine what physical hardware needs to be accessed to satisfy a particular command in response to the command from the front end manager module 166. The configuration manager module 170 is a set of APIs (Application Program Interface) routines and protocols to create an object or the capability of the object which then provides the information to the front end manager module 166 to complete the response to a particular command.

Due to the asynchronous nature of the front end manager module 166, object server module 168 and configuration manager module 170 as well as the preferred asynchronous nature of various optional modules that will be discussed hereinafter in greater detail, all of the modules operate independently and provide a parallel architecture that provides high performance and high capacity and an ability to adapt to new technology with sustained data rates in the range of 237 Megabytes per second (MB/s) or greater. The inherently asynchronous nature of the modules facilitate integration of independent applications such as HSM archiving, robotics, storage devices including DAT (Data Archiving Tape), CD-ROM, disks, jukeboxes, etc. Further the novel information management engine not only operates with state of the art 'off the shelf' hardware but is capable of assimilating the protocols of a variety of operating systems to accommodate advances in technology as they become available. The novel information management engine 100 can be based upon a real time operating system (PSOS) (which is currently available from Wind River Systems of Alameda, California) or QNX (currently available from Kanata of Ontario, Canada) but may also utilize a general operating system such as Windows or LINUX.

The novel information management engine 100 in addition to including an asynchronous front end module 166, object server module 168 and configuration module 170 may include further asynchronous modules, such as a back end manager module 172 which interfaces with hardware devices (PAD) and/or controller adaptors between the transparent interface 164 and the hardware to devices (PAD) 154. The asynchronous back end manager module 172 together with the other asynchronous modules in the novel information management engine provide a parallelism as will be discussed hereinafter in greater detail which avoids the bottleneck of the application layer 106 in systems and networks without the novel information management engine 100 which trunk all data delivery and acquisition information through the application server 104.

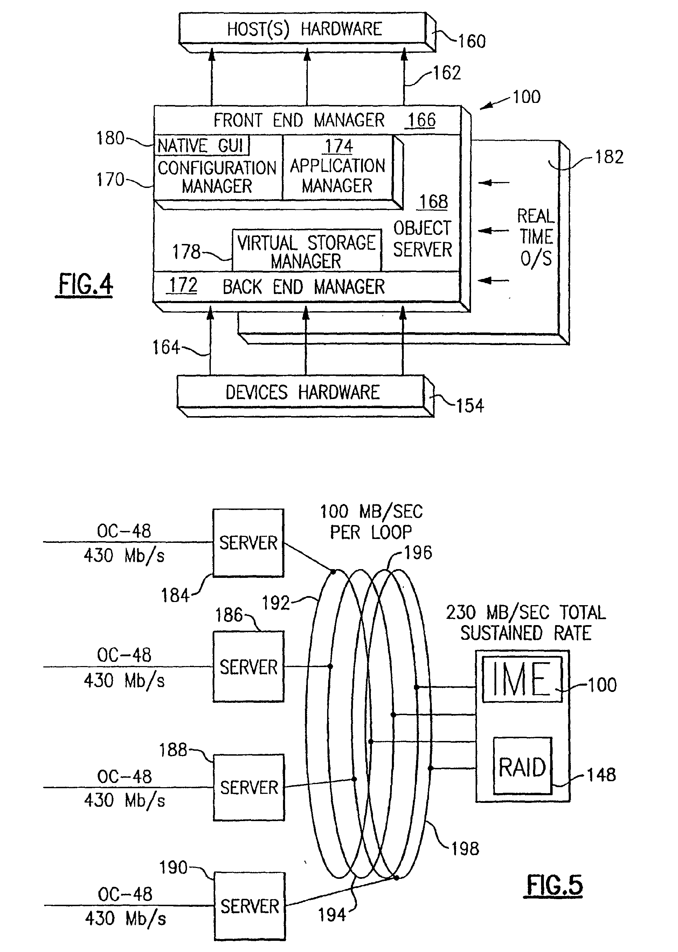

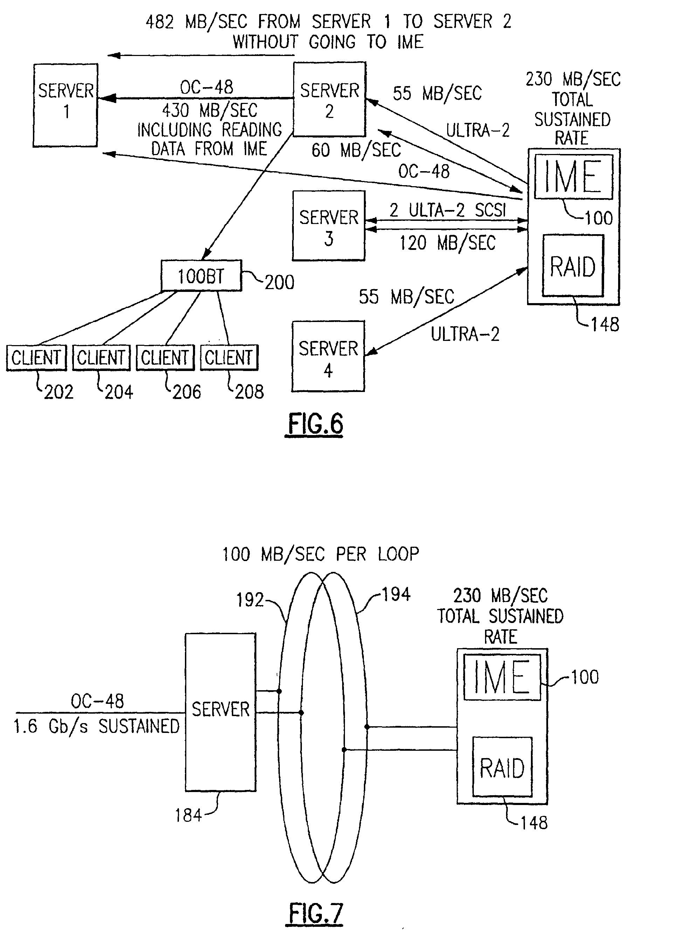

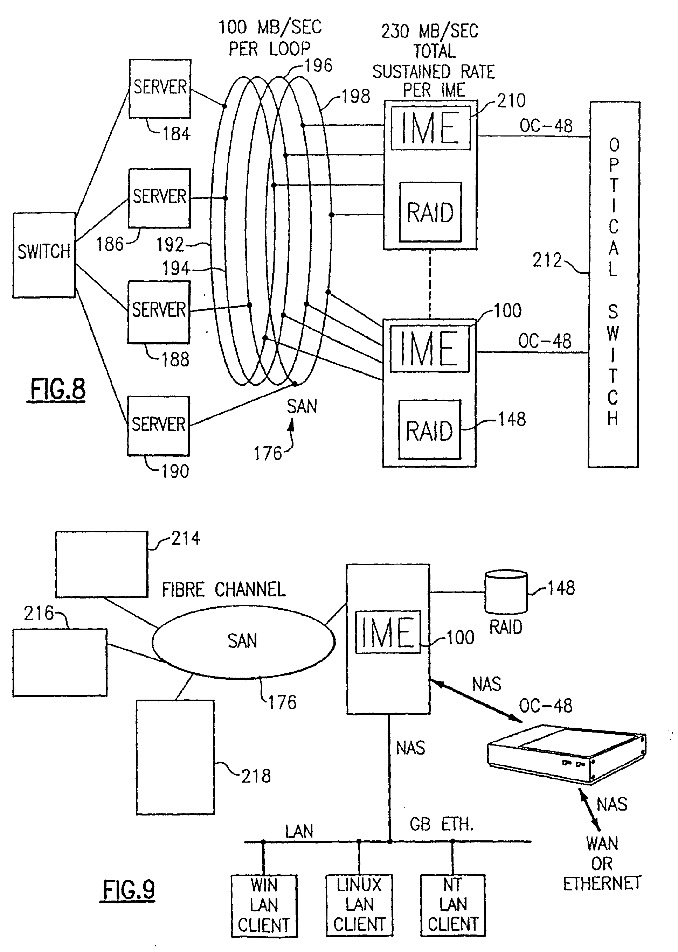

Referring now to FIGs. 4 and 6 the novel information management engine 100 in accordance with the preferred embodiment of the invention is illustrated having a front end management module 166, an object server module 168, a configuration manager module 170 and a back end manager module 172. Even without an application manager module 172 data can be accessed across servers but the data cannot be shared. The addition of an application manager module allows the novel information management engine to allow multiple heterogeneous and homogeneous servers to access and share data as illustrated in FIGs. 6 and 8. The application manager module 174 can utilize various operating systems such as Sun OS, Windows, LINUX and UNIX operating systems. The application manager module 174 provides greater functionality and flexibility in connecting various types of operating systems to share data through various methods such as a SAN 176 (Storage Area Network), NAS (FIG. 9) or other type of networks.

The novel information management engine 100 in the preferred embodiment also includes a virtual storage manager module 178 which operates as a cache for the novel information manager engine 100. The virtual storage manager module 178 utilizes an algorithm which determines if certain types of data stay in the cache, and, if the system has a mirror what data is to be mirrored. The virtual storage manager module 178 interfaces with the application manager module 174 and the object server module 168 to not only provide a parallelism but also to provide quick response to data requests from the front end manager 166 to achieve parallelism in the novel information management engine.

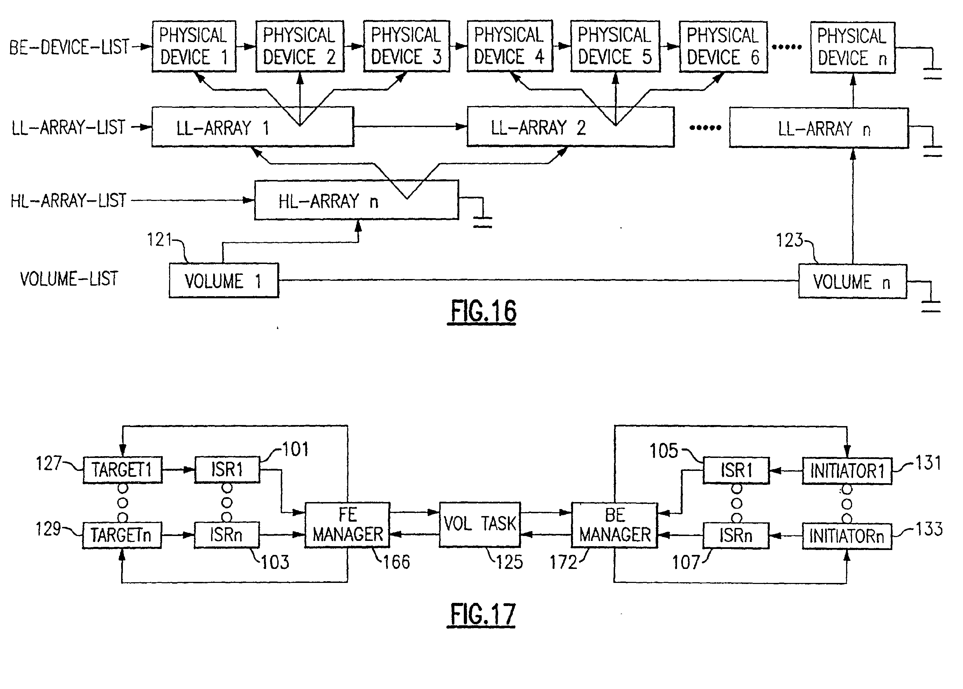

The novel information management engine 100 in the best mode also includes a native GUI 180 which provides various icons and interfaces with the GUI 132 (FIG. 1) in the processor to provide information as to various functions of the novel information management engine 100. A real time operating system 182 may be provided for the novel information management engine 100 utilizing an existing operating system in the application layer, such as Windows NT or some other real time operating system, or it may be a real time operating system specifically developed for the novel information management engine 100 as illustrated in FIGs. 17, 18, 19 and 23A-23E.

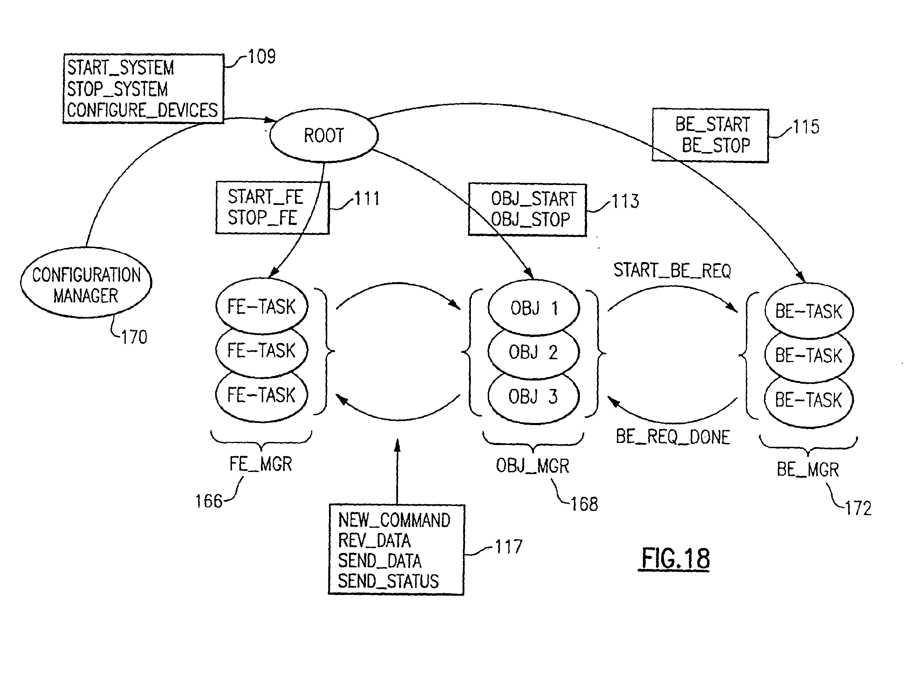

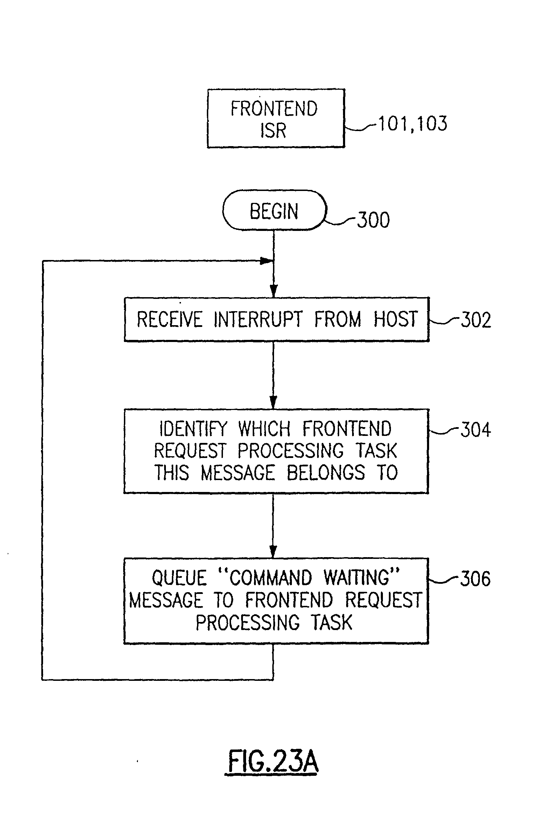

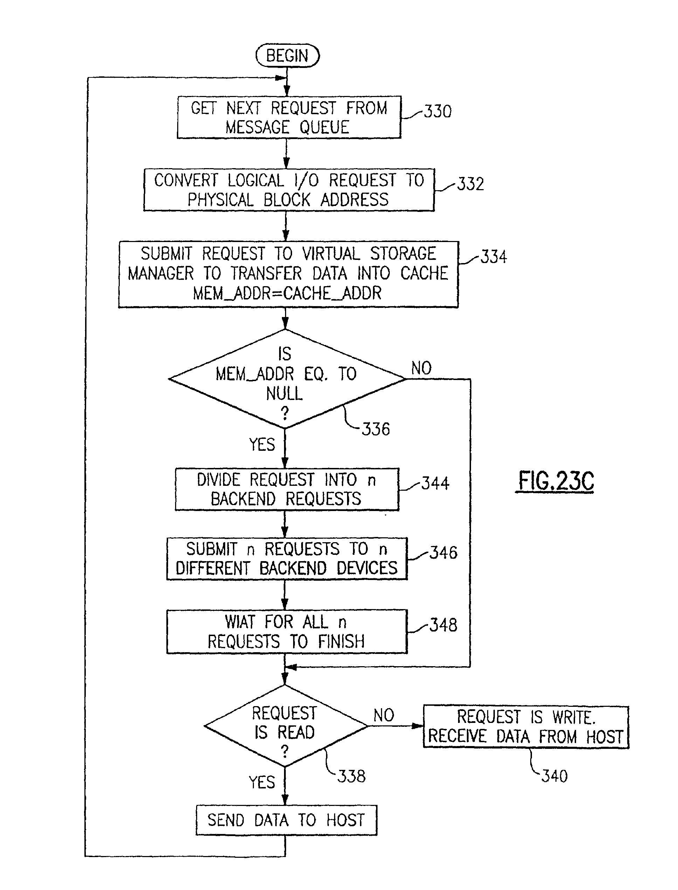

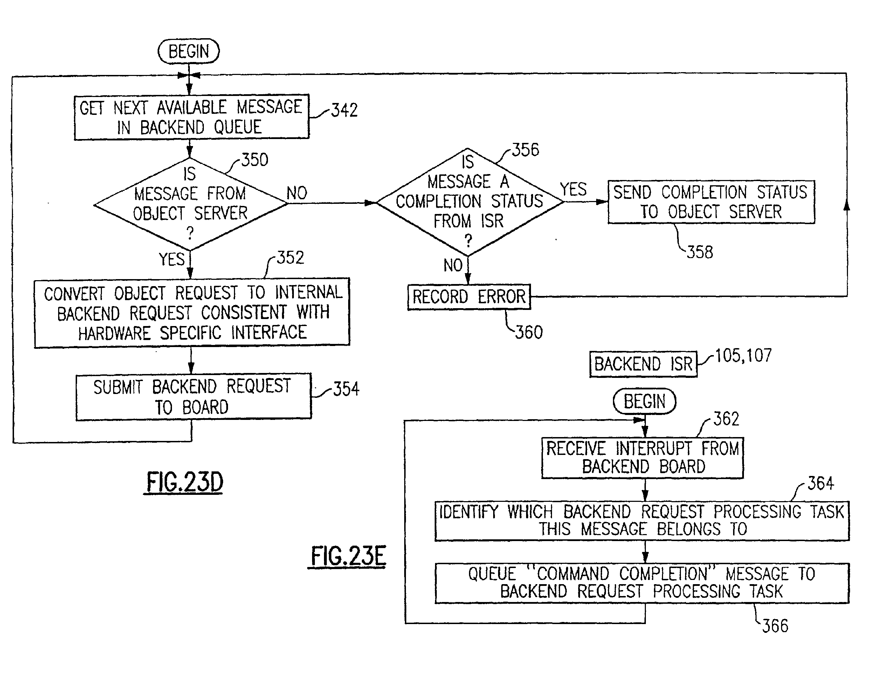

The real time operating system (OS) 182 as illustrated in FIGs. 17, 18, 19 and 23A-23E includes a nucleus of supervisory software (operating system), which performs services on demand, schedules, manages and allocates resources and is able to coordinate multiple asynchronous activities. This nucleus may be a prior art General Purpose Operating System (GPOS) or a Real Time Operating System (RTOS) as illustrated in FIGs. 17, 18, 19 and 23A-23E. In order to perform efficiently, the OS of the best mode must be able to provide two classes of program elements: tasks and Interrupt Service Routines (ISRs). The ISR1 to ISRn illustrated by blocks 101 and 103 in (FE) front end manager module 166 are illustrated in operation in FIG. 18 and FIG. 23A. The ISR1 to ISRn illustrated by blocks 105 and 107 in (BE) back end manager module 172 are illustrated in operation in FIG. 18 and FIG. 23E. The OS 182 must allow interrupt handlers as represented by blocks 109, 111, 113, 115 and 117 to directly trigger tasks which may in turn trigger other tasks. While the novel information management engine 100 tasks execute synchronously different tasks can execute asynchronously. One task can be stopped in midstream, and execution passed to another task at any time.

Functionally speaking, a prior art GPOS may be able to provide the above-mentioned services and programming elements. However, the performance that the novel information management engine 100 needs to perform its best can only be supplied by a Real Time OS, which provides a lean way of switching between tasks, and a deterministic performance behavior for an Interrupt Service Routine. The services that the OS needs to provide (whether 'off the shelf', general purpose (prior art), or real time in accordance with the best mode) are as follows:
1. Task Management (e.g., task_create, task_start, task_suspend, task_delete)
2. Storage Allocation (e.g., malloc and free)
3. Message Queue Services
4. Event and Asynchronous Signal Services
5. Semaphore Services
6. Time Management and Timer Services
7. Interrupt Completion Service
8. Multiprocessor Support Services

Referring again to FIGs. 4, 5 and 6 an illustration of the parallelism provided by the novel information management engine 100 is illustrated. The asynchronous modules of the novel information management engine 100 provide parallel asynchronous loops between servers 184, 186, 188 and 190 through loops 192, 194, 196 and 198. Each of these loops 192-198 receive all of the data acquisition and delivery functions from the servers 184-190 into the information management engine 100 in which the front end manager module 166 converts the data into a common format and provides commands for the object server module 168 which deciphers the command and transmits the commands to the configuration manager module 170. The data and data commands converted into a common format are acted upon by the application manager module 174, configuration manager module 170 which or the back end manager module 172 and responses are sent back through loops 192-198 to the servers 184-190 at a sustained rate of 230 Megabytes per second (MB/s) through each of the 100 Megabytes per second (MB/s) loops 192-196 to each of the servers 184-190.

As illustrated in FIG. 6 some of the connections between the servers need not all be through an OC-48 (Optical Carrier) link which carries 430 Megabits per second (Mb/s) link. A 100 BT 200 may be utilized to link to clients 202, 204, 206 and 208 to server 2. Also, as illustrated in FIG. 6, the links between server 3 and the novel information management engine may be Ultra 2 SCSI utilizing two 55 Megabyte lines to provide 120 Megabytes per second or Ultra 2 at 55 Megabytes per second rate which can be accommodated by the novel information management engine 100.

Other configurations of the novel information management engine are illustrated in FIG. 8 wherein a first information management engine 100 and a second information management engine 210 are utilized together in a SAN 176 which are connected to parallel loops 192-198 to connect servers 184 to 190 to information management engines 100 and 210. The information management engines 100 and 210 may be connected to an optical switch 212 to increase the overall speed of the system and access it via a wide area network. Other information management engine configurations are illustrated in FIG. 7 where server 184 is connected to two parallel loops 192 and 194 which are connected to a RAID 148 to increase the speed of file duplication and reconstruction on the fly capabilities of the novel information storage management engine.

Referring now to FIG. 9 the novel information management engine may be utilized in network attached storage support (NAS) as well as storage area network (SAN) applications in which a Solaris server 214, a LINUX server 216 and an NT server 218 are connected to a SAN 176 which are connected to the novel information management engine 100. The novel information management engine may be connected to a RAID controller 148 as well as network attached storage systems through an OC-48 link or to a WAN or Ethernet or to a LAN or a GbEthernet (Gigabits Ethernet) which itself may be connected to WANs or LANs in the network to provide the advantages of streaming data utilizing the novel information management engine of the invention.

The novel information management engine 100 is based on a real time operating system that acts as a data arbitrator between multiple front end connections such as fibre ATM, SSA, SCSI, serial PCI, Ethernet, etc. as has heretofore been described. In addition a broad range of data and device management applications are provided for by the novel information management engine including backup, HSM, mastering CDs, etc. and multiple back end (stripping) device connections such as RAIDs, SCSI devices which are also accommodated and managed by the novel transparent interface of the novel information management engine.

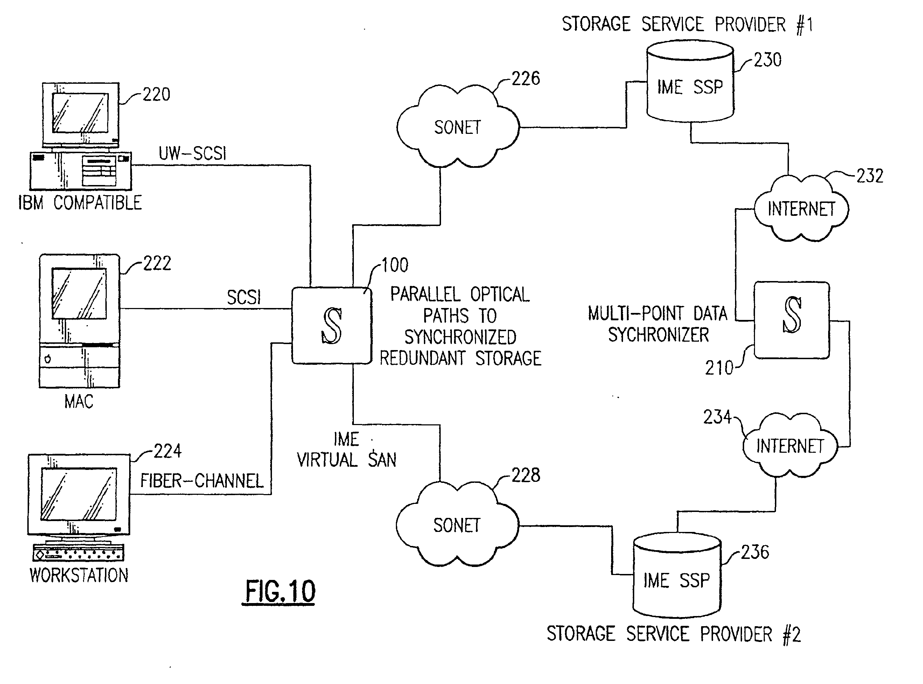

Referring to FIG. 10 a parallel persistence SSP (Storage Service Providers) models are provided having a number of heterogeneous operating systems and heterogeneous network connections managed by the novel information management engine 100. In FIG. 10 an IBM compatible system 220 is connected via a UW SCSI connection to a first novel information management engine 100 while a Macintosh system 222 is connected by a SCSI interface to the first novel information management engine 100 while a work station 224 is connected by a fibre channel to the first novel information engine 100 which includes SONET (Synchronous Optical Network) connections 226 and 228 to a first storage service provider 230 which includes a dedicated novel information management engine 100.

The first storage server provider 230 can be connected through the Internet connection 232 to a second information management engine 210 which includes an Internet connection 234 to a second storage service provider 236 containing a dedicated information management engine 100 which is connected through SONET 228 to provide a parallel persistence SSP model. This unique parallel persistence architecture and direct to WAN interface network connections provide a seamless, transparent and integrated support for secure storage providers through industry standard optical interfaces including SONET to enhance streaming data capabilities. In such applications and embodiments of the invention utilizing multiple storage management engines, the speed of bidirectional transfer of streaming data is increased along with bandwidth and capacity of the entire system to avoid bottlenecks in the prior art.

In this manner the novel information management engine provides a fault-tolerant reliability with enterprise class performance for homogeneous and heterogeneous networks for clients. To each client the information management engine provides a standard storage interface recognized natively by each host operating system. From there the novel information management engines takes control to ensure storage and data retrieval into a common operating tool of reliable data. That tool of data can be local to the enterprise or mirrored through parallel autonomous optical networks to remote sites.

The novel parallel persistence architecture and direct to WAN interface of the novel information engine provides seamless, transparent and integrated support for storage providers. Further the novel information management engine with its adaptive cache module combines dynamic detection and annealing of failed storage components or pathways to ensure 6-sigma reliability and isochronous data streaming in a single integrated product. Adaptive operational parameters on the fly to respond to and ensure guaranteed minimum data delivery. Dynamic read annealing detects failed components and pathways and reconfigures itself to provide alternative routes or storage locations without the loss of data and with minimum of loss of interim performance. Remote autonomous data synchronizers can be utilized to ensure that mirror data is always current.

The novel information management engine can be used in Wide Area Networks as well as LANs to provide the advantages of the invention. In WAN application the utilization of the novel information management engine creates SWANs (Seamless Wide Area Networks) as illustrated in FIG. 10A. In such an application a fibre channel storage area network (SAN) can be connected to a variety of servers such as NT servers, Solaris servers and LINUX servers and connected by fibre through a novel information management engine 100 with RAIDs as well as tape or other storage devices. The information management engine 100 can then be connected to the Internet to support multiple homogeneous or heterogeneous hosts or servers connected to the Internet and provide immense storage farms (36 Terabytes of disk from a single, standard Intel based platform) consisting of disk, tape, CD, jukeboxes, optical, etc. In this manner the novel information management engine supports the latest technology in optical interface cards (OC-48 - 2.5 Gigabit)(Billion bits per second) (Gb per second) and the novel information system serves as a gateway for tens of thousands of clients via the Internet and corporate Intranets to provide the high volume, broad bandwidth required in todays IT.

The SWANs created can be utilized with data storage devices that contain hundreds of Megabytes of data and, where seconds make the difference between life and death, can be used for high end web and e-commerce servers, entertainment applications such as video distribution on demand, non-linear digital editing, streaming media servers and media collaboration, extended clustering environments, aerospace engineering, simulation and analysis, training, etc.

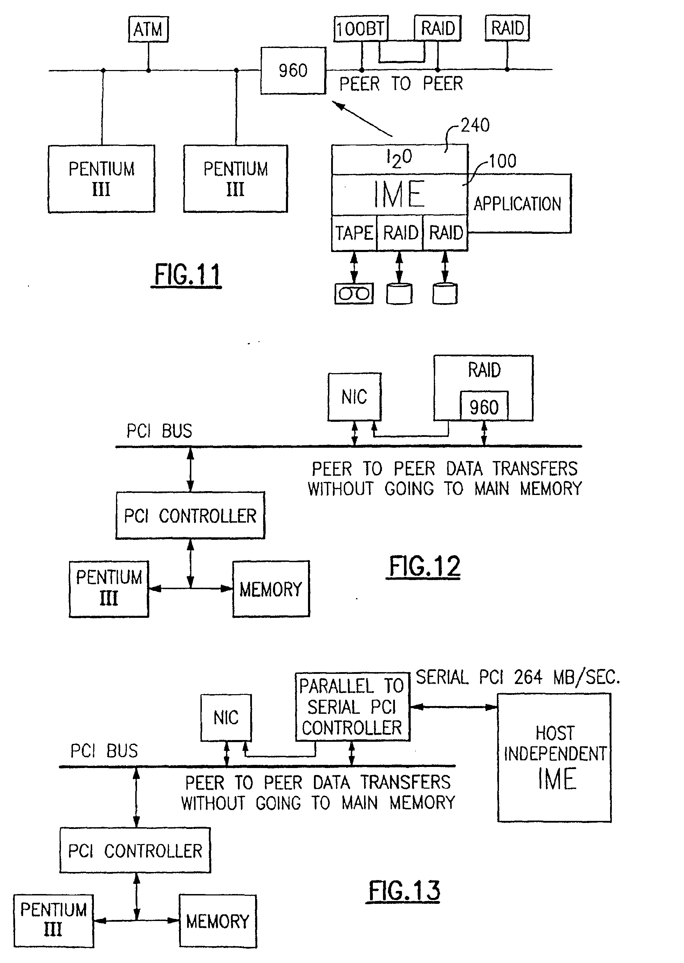

Referring now to FIG. 11, an application of the novel information management engine 100 is illustrated embedded into the coprocessor 960 of the host computer. This way, the information management engine does not need a separate box to run on. The communications and data transfer take place all within the host computer via an industry standard protocol such as I₂O 240 (Intelligent Input/Output). Since the information management engine (IME) controls the secondary bus, it can allow peer to peer transfers between I/O cards, and translate high level I₂O commands to the appropriate low level I/O protocols for the controlled I/O devices.

In FIG. 12 efficiency of the information management engine is further improved. Data can be transferred from one device to another without the intervention of the main CPU. This allows intelligent NIC cards to take up some of the tasks that otherwise would be executed by the main CPU. It also allows the main CPU to work on other tasks that do not have to do with the details of transferring the data. In addition, it avoids the double transfer of data. Unlike prior art implementations, data does not have to be transferred from one device to memory and then to the other device.

FIG. 13 illustrates the novel information management 100 utilizing a serial PCI controller to provide peer to peer data transfers without going through the main memory.

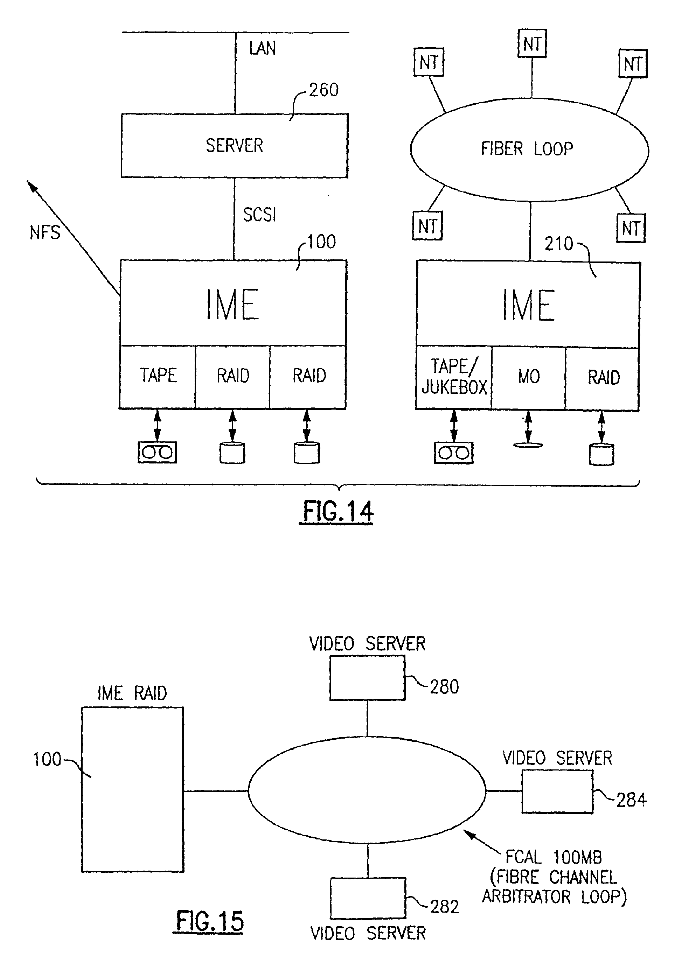

FIG. 14 is an example of host connections to the novel information management engine. The information management engine can be connected to a server 260 via a SCSI connection to transfer block level data. At the same time, it could connect to other host computers via a network connection such as Ethernet using a file level protocol such as NFS. The second information management engine 210 is connected via a fibre channel loop to multiple servers. These servers can be configured to share the same data or partition an exclusive area on the information management engine 210.

FIG. 15 illustrates a clustering of video servers utilizing a SAN (Storage Area Network) utilizing an information management engine 100 connected to video servers 280, 282 and 284 which may be utilized to provide Video On Demand service.

FIG. 16 is an example of the information management engine configured as a high performance/high availability storage device. Be_device_list represents the physical devices connected to the back end of the information management engine. The Ila_arrays is a set of RAID devices that give the novel information management engine its high availability characteristics. Striping data across multiple Ila_arrays via an hl_array gives the IME the ability to transfer data in a parallel fashion to the back end devices. This improves data transfer rates by the number of Il_arrays that are defined. The volume is a logical representation of the hl_array that is presented to the host to transfer data to and from.

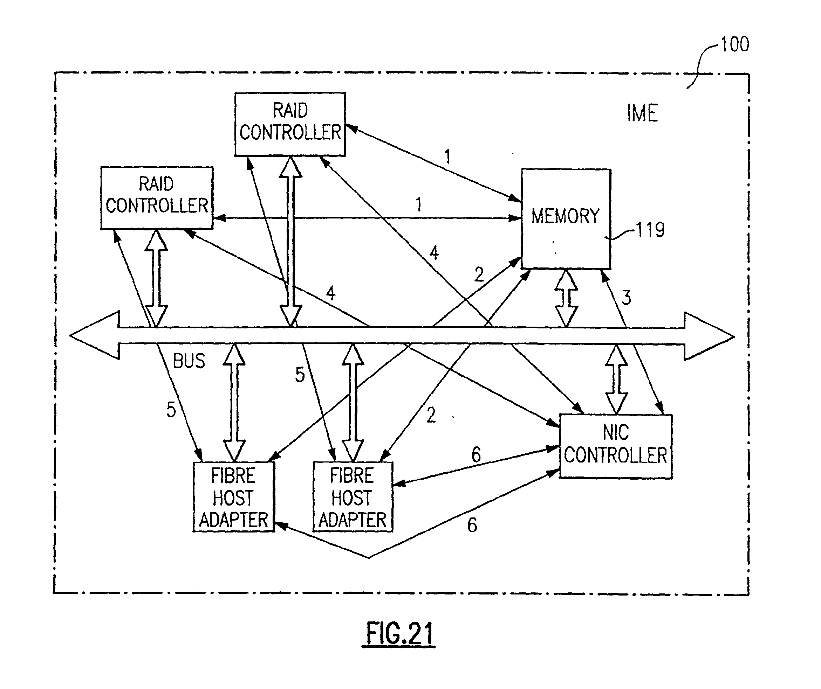

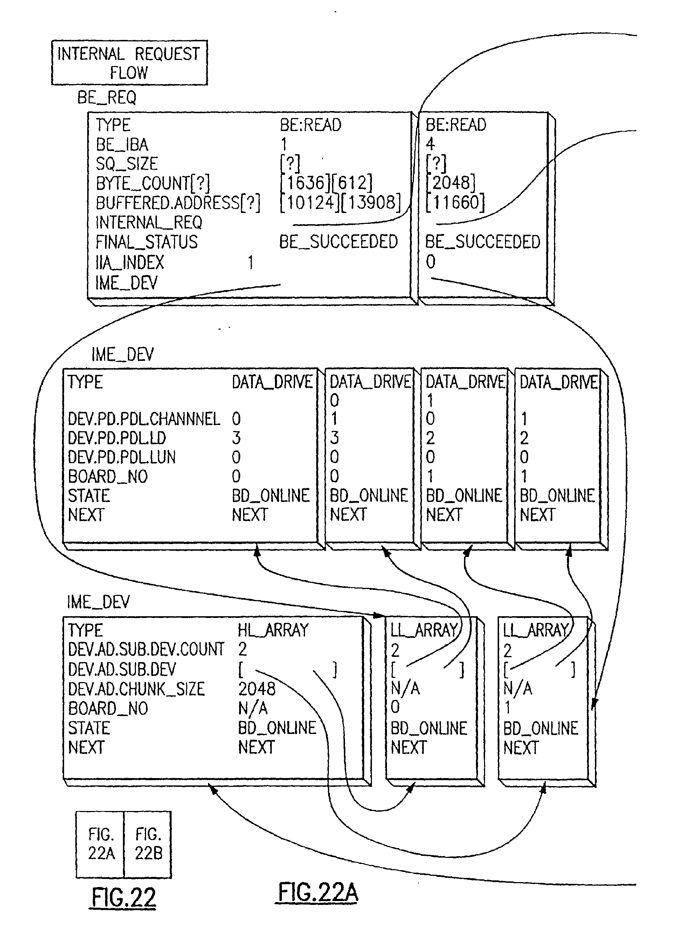

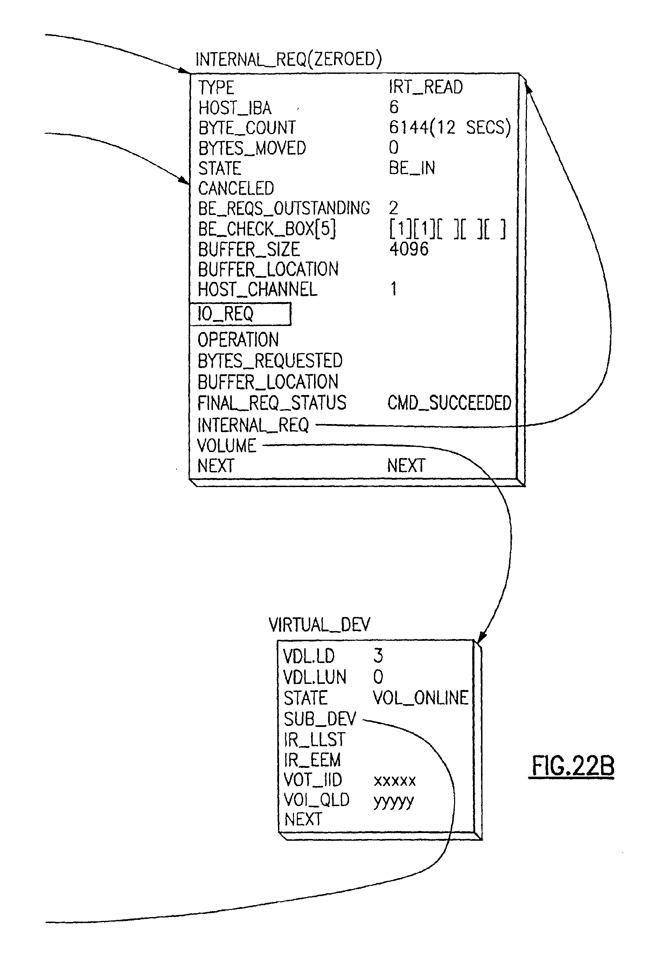

Referring now to FIGs. 16, 17, 21 and 22 the major data structures (FIG. 16) command flow (FIG. 17) I/O (input/output) of data flows (FIG. 21 and 22) are illustrated. In FIG. 21 the bidirectional I/O data flow of the novel platform managed by the novel information management engine 100 is illustrated. Bidirectional link 1 illustrates the transfer of data between a back end manager controller to memory 119. Bidirectional links 2 and 3 illustrate the transfer of data from front end controller to memory 119. Bidirectional links 4 and 5 illustrate the transfer of data from a back end controller and a front end controller. Bidirectional link 6 illustrates the bidirectional transfers of data between two front end controllers which adds routing capabilities to the novel information management engine 100. The data transfers can be peer to peer since every I/O card in the associated hardware (FIG. 20) is intelligent in that it contains its own processor and the necessary microcode support to handle this feature. In the novel platform provided by the invention they can be either Bus masters or Slaves at any given point in time.

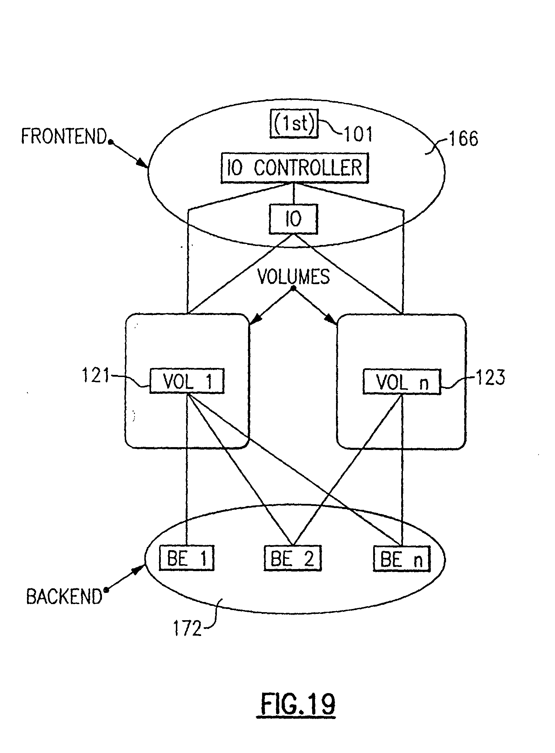

In FIGs. 16, 17 and 18 the configuration of a typical system (FIG. 16) with RAID is illustrated with volume 1 box 121 and volume n box 123 representing how the data is divided to provide parallel data flows as has heretofore been described. Vol task box 125 (FIG. 17) similarly illustrates the division of data into parallel paths that are managed as a single data path by the novel information management engine 100. FIGs. 17 and 19 also illustrate the parallelism previously described between the front end manager module 166 and the back end manager module 172 with a division of data paths between volume 1 box 121 and volume n box 123. FIG. 17 also illustrates how the client computer can virtually simultaneously be a target as represented by box 127 and 129 or an initiator as represented by box 131 and 133 with the multiple parallel data paths and the operation of the ISR as represented by box 101 and 103 in front end manager module 166 and ISR in the back end manager module 172 as represented by box 131 and 133.

Referring now to FIGs. 23A to 23E the block diagram of a computer system incorporating and for operating of the novel information management engine 100 is illustrated in accordance with the best mode of the invention. In FIG. 23A the software for the ISR 101, 103 of the front end manager module is illustrated. After the software for the novel information management is loaded the front end manager module ISR begins at block 300 to determine if an interrupt message has been received from the host processor as represented by block 302. Once an interrupt message is received the front end manager module 166 identifies the processing task relevant to the interrupt message in block 304. The interrupt message is then queued to a "command waiting" message in the front end manager module to process a task as represented by block 306.

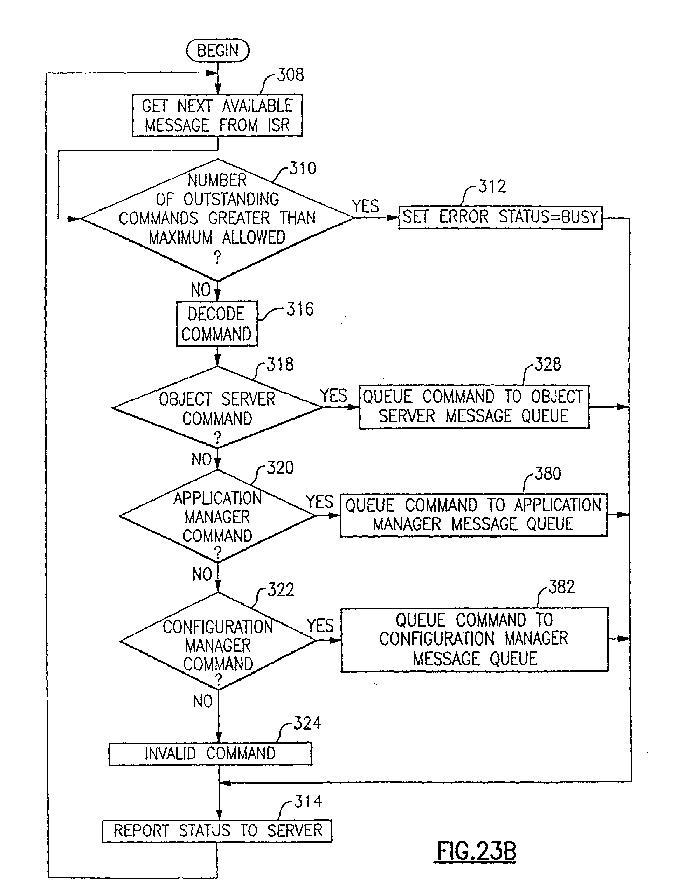

In FIG. 23B the front end manager module 166 begins processing the message from the ISR as represented by block 308. A determination is made at block 310 if the number of outstanding commands are greater than the maximum allowed by the system. In this case the engine 100 sets error status as busy as represented by block 312 and a report status is sent to server as represented by block 314 and the process is repeated until the number of commands are not greater than the maximum allowed.

Once the message processed at block 310 does not exceed the maximum allowed the message is decoded and a command is sent as represented by block 316 for action by the object server module 168 as represented by block 318, the application manager module 174 as represented by block 320, the configuration manager module as represented by block 322 or for a determination as to whether the command is valid as represented by block 324.

Once a command is received for the object server module a queued command is sent to the object server module 168 as represented by block 328. Commands received by the object server module are represented by block 330. The command is converted into a I/O request as represented by block 332. The I/O request is submitted to virtual storage in the memory manager module 178 to transfer the data to cache as represented by block 334. A determination is made as to the amount of data required to satisfy the request at block 336. If the volume of data does not require parallel paths it is sent to block 338 to the back end manager module 172 as represented by blocks 340 and 342 (FIG. 23D). If the data request requires parallel data data paths the data is divided up as represented by block 344 and submitted as n requests to the back end manager module as represented by block 346 before the data goes to back end manager module 172 as represented by block 342 and the bidirectional transfer of data is completed as represented by block 348.

The back end manager module 172 receives the messages as represented by block 342 (FIG. 23D) and makes a determination at block 350 if the message is from the object server module 168. If the message is from the object server module 168 the data request is converted to a format consistent with the hardware specific interface as represented by block 352. The request is then submitted to the proper storage medium as represented by block 354. In the event the message is not from the object server module 168 a determination is made at block 356 whether the message is from an ISR and, if so, a completion status is sent to the object server at block 358. If the message is not from an ISR an error is recorded at block 360 and sent back for further processing.

The operation of the back end ISR is illustrated in FIG. 23E in which, when an interrupt message is received from a back end board as represented by block 362, the back end ISR determines which back end task the message belongs to as represented by block 364. A queued "command completion" message to the back end request processing task is then completed as represented by block 366.

The logic flow diagram of the configuration manager module 166 from block 380 and from the application manager module 174 as represented by block 382 are both left up to the designer of such modules to determine its functionality and performance. The novel information management engine provides a platform and a protocol and a set of APIs that allows third party houses to develop an application that will suit their needs for functionality and performance.

The novel information management engine and method of the invention operates by removing substantially all and preferably all the data acquisition and delivery responsibilities of the application layer or server of the processor and transfers those responsibilities to the novel information management engine which allows the information management engine to provide parallel asynchronous modules for managing information and data. The novel information management engine and method of the invention in translating data to a common format allows the assimilation of the technological attributes of the hardware into the core of the novel information management engine. As a result the novel information management engine can provide a transparent interface between various brands such as Sun, IBM, Dell, Compaq, Digital, Hewlett-Packard, etc. and utilize technology from Intel, Seagate, IBM, DPT, Mylex, AMI, LSI, Logic, Adaptec, QLogic and others to allow data access interoperability and reliability like clustering and fail over in the core technology into the novel real time information management engine of the invention.

The novel information management engine achieves its performance through three core asynchronous modules and in the best mode all five asynchronous modules to allow the real time satisfaction of multiple data transfer requests through the use of parallelism. The three core modules of the novel information management engine are the front end manager module, the object server module and a configuration manager module. The functionally independent front end manager module is responsible for receiving external requests that configure a data object, retrieve a data object or send a data object. The request as well as all data responsive to the request is translated into a common format which is then transmitted to a configuration manager module, an application manager module or an object server module. For each bus adaptor connected to a host the front end manager module creates a task that will manage the production of the internal request to one of the other modules. As will be recognized by those skilled in the art the command or request function and the translation function of the front end manager module may be broken up and performed by one or more of the other modules or be performed by an additional module.

The object server module creates an object task for each data object that is presented to a host or hosts. The host may access an object either directly as a data repository or through the application manager module. The object server module presents a virtual object for the front end manager module or the application manager module to converse with. It receives internal requests in the form of a front end manager module or application manager module and coordinates all the activities to complete the request. These activities may include having data (provided by the front end manager module or application manager module) stored on the underlying physical devices for that object, retrieving data from the underlying devices and providing final status for each internal request. The object server module initiates a task for each of the objects that are defined by the configuration manager module. Each task maintains its individual status and coordinates internal activities that promote high data availability. In a RAID subsystem example an object can be a logical volume comprised of multiple hard disks to achieve performance and fault tolerance. Some of the tasks in such a system could include utilizing spare drives, rebuilding data drives, error thresholding and reconstruction on the fly.

The configuration manager module provides an interface that allows for the definition of virtual objects for the object server module to present to the host. A client accessing the novel information engine through such an interface can be a graphic user interface, a web browser or a character based user interface such as VT 100. A configuration manager module receives requests from its front end manager module interface which can be an RS 232 serial link, parallel SCSI with specific vendor commands or some other type of network interface such as fibre channel or Ethernet.

The back end manager module initiates tasks for each bus adaptor connected to its backplane. Each task satisfies requests made to it by the virtual object tasks. The format of the request made to the back end manager and to its corresponding bus adaptor is dictated by the manufacture of such device or by an industry standard interface such as I₂O (Intelligent Input/Output) or ASPI (Advanced SCSI Programming Interface).

The application manager module, like the back end manager module, is an optional module but, like the back end manager module, provides the novel information management engine with great functional advantages. The application manager module executes applications that perform specialized operations on the virtual objects. As an application allows the information management to remove I/O (Input/Output) intensive tasks from the servers that it is supporting. A file system connected to the network, for example, provides a network attached storage solution. Supporting applications such as HSM, backup and archiving can be implemented directly on the storage subsystem without introducing a performance drain on attached servers with such Input/Output tasks. The application manager module is designed to deliver data efficiently and asynchronously reacts with other modules to increase performance and adaptability of the novel information management engine.

The novel platform and information management engine of the invention may be implemented and embodied in a number of ways including the use of various software storage devices such as by utilizing storage disks of various types such as CD-ROM, laser disks, tapes, floppy disks and other such medium for carrying the novel information management engine. In addition the novel information management engine can be reduced to physical forms in the form of chips or other physical devices for bearing software for carrying instructions as are known by those skilled in the art. In addition the novel information management engine may be incorporated and embedded as part of the software of new computer systems which incorporate the novel information management engine into various items of hardware embedded in new computer systems by achieving the benefits and advantages of the novel information management engine and method of the invention. These and other devices for recording, embodying or encasing the novel information management engine or method of the invention are all deemed to be included within the scope of the claims of the present invention.

In addition to implementing the present invention in a variety of formats utilizing the variety of devices for carrying software instructions provided by the novel information management engine and method, the novel information management engine and method may be incorporated in a number of different embodiments only some of which have been illustrated in the drawings since such embodiments are merely illustrative of the number of applications of the present invention. Further the applications of the invention may utilize all of the core modules of the information management engine or incorporate some of the modules of the information management engine with other modules designed to accomplish specific operations in various types of operating environments. Such applications and uses of the novel information management system and method of the invention are also intended to be included in the claims.

In addition the core modules of the front end manager module, object server module and configuration manager module may be termed differently in different applications and can be combined with the optional back end manager module, application manager module, virtual storage manager module, native GUI module or other modules in varying combinations. Such combinations which include the core modules (namely the front end manager module and object server module and configuration manager module) are all deemed to be included within the scope of the present claims. These and other implementations of the invention are deemed to be included within the scope of the appended claims.

As used herein and in the following claims, the word 'comprising' or 'comprises' is used in its technical sense to mean the enumerated elements include but do not exclude additional elements which may or may not be specifically included in the dependent claims. It will be understood such additions, whether or not included in the dependent claims, are modifications that both can be made within the scope of the invention. It will be appreciated by those skilled in the art that a wide range of changes and modification can be made to the invention without departing from the spirit and scope of the invention as defined in the following claims:

## Claims

1. An information management engine comprising:
(a) a front end manager module for the bidirectional transfer of data and executing commands;
(b) an object server module for receiving said commands and coordinating the activities necessary to satisfy said commands; and
(c) a configuration manager module for configuring digital data in response to said commands.

2. The information management engine of claim 1 wherein said front end manager module removes the bidirectional transfer of data tasks from the application layer of a processor.

3. The information management engine of claim 1 wherein said front end manager module converts said data into an intermediate common format.

4. The information management engine of claim 2 further comprising a back end manager module for providing a transparent interface to a peripheral device.

5. The information management engine of claim 3 wherein said front end manager module converts said data into an intermediate common format.

6. The information management engine of claim 5 further comprising an application manager module for removing processor intensive and data input/output intensive tasks from said object server module.

7. The information management engine of claim 6 wherein said application manager module, said object server module and said configuration manager module are designed to receive multiple commands from said front end manager module.

8. The information management engine of claim 6 wherein said front end manager module, said object server module and said configuration manager module operate asynchronously.

9. The information management engine of claim 8 wherein said application manager module operates asynchronously.

10. The information management engine of claim 5 further comprising a virtual storage manager module.

11. The information management engine of claim 10 wherein said virtual storage manager module determines what data is to be retained in said virtual storage manager.

12. The information management engine of claim 11 wherein said virtual storage manager module determines the data to mirror.

13. The information management engine of claim 8 further comprising a native graphic user interface.

14. The information management engine of claim 8 further comprising a real time operating system.

15. The information management engine of claim 14 wherein said real time operating system is designed to utilize existing operating systems software.

16. The information management engine of claim 14 wherein said real time operating system is designed to input and output data along parallel data paths.

17. The information management engine of claim 15 wherein said parallel data paths are divided between said object server module and said application manager module.

18. The information management engine of claim 3 wherein said information management engine communicates with a second information management engine having a front end manager module, an object server module and a configuration manager module.

19. The information management engine of claim 3 wherein said information management engine communicates with the Internet.

20. A data management engine comprising:
(a) a front end manager module for providing a transparent interface to the application layer of a processor and providing commands;
(b) an object server module for receiving commands from said front end manager module;
(c) a configuration manager module for configuring data in response to said commands; and
(d) a back end manager module for providing a transparent interface to a peripheral device.

21. The data management engine of claim 20 further comprising an application manager module for removing input and output intensive tasks from said object server module.

22. The data management engine of claim 21 wherein said application manager module removes input and output intensive tasks from said configuration manager module and said back end manager module.

23. The data management engine of claim 20 further comprising a virtual storage manager module.

24. The data management engine of claim 23 further comprising a native graphic user interface module.

25. The data management engine of claim 23 further comprising a real time operating system module.

26. The data management engine of claim 23 wherein said real time operating system module balances parallel input and output data communications.

27. The data management engine of claim 26 wherein said front end manager module converts data into an intermediate common format.

28. The data management engine of claim 26 wherein said data management engine communicates with an Ethernet adaptor.

29. The data management engine of claim 26 wherein said data management engine communicates with a WAN (Wide Area Network).

30. A method of increasing the speed of an information management system comprising:
(a) transferring the data acquisition and delivery tasks from the application layer of a processor to an information management engine; and
(b) providing multiple data input and output data flow paths between said information management engine and the backplane of said processor.

31. The method of claim 30 further comprising the step of dividing said data flow among said multiple input and output data flow paths.

32. The method of claim 31 further comprising the step of balancing the data flow among said multiple input and output data flow paths.

33. The method of claim 30 wherein said step of balancing the data flow among multiple input and output flow paths is accomplished by utilizing computer software.

34. The method of claim 30 wherein said steps of transferring and providing are accomplished by utilizing computer software.

35. The method of claim 30 further comprising the step of utilizing said information management engine for communications on the Internet.

36. The method of claim 30 further comprising the step of utilizing said information management engine for communications on an Ethernet network.

37. The method of claim 30 further comprising the step of utilizing said information management engine for communications on a LAN (Local Area Network).

38. The method of claim 30 further comprising the step of utilizing said information management engine for communications on a WAN (Wide Area Network).

39. The method of claim 30 further comprising the step of connecting said information management engine to a plurality of processors having an information management engine.

40. A method for expediting streaming data comprising:
(a) establishing a data engine accelerator by providing a plurality of parallel data paths in the application layer of a processor;
(b) providing a gateway or router capabilities for said data engine accelerator to the Internet; and
(c) utilizing a storage area network to provide for host activity common to all data.

41. The method of claim 40 wherein said data engine accelerator is provided by computer software.

42. The method of claim 41 further comprising the step of balancing the data flow along said plurality of parallel data paths.

43. The method of claim 42 wherein said step of balancing the data flow is provided by computer software.

44. The method of claim 40 further comprising the step of establishing a second data engine accelerator by providing a plurality of parallel data paths in the application layer of a second processor.

45. The method of claim 44 further comprising the step of connecting said second processor to said gateway.

46. The method of claim 44 further comprising the step of adding a cache to said data engine accelerator.

47. The method of claim 46 further comprising the step of adding a RAID.

48. The method of claim 46 further comprising the step of converting data into an intermediate common format in said first data engine accelerator and said second data engine accelerator.

49. The method of claim 48 wherein said first processor and said second processor are in heterogeneous systems and data is transferred through said first data engine accelerator and said second data engine accelerator.

50. A computer implemented electronic information engine acceleration device comprising:
(a) a computer readable program device configured to transfer the data acquisition and delivery functions from the application layer of a processor;
(b) a computer readable program device configured to receive the data acquisition and delivery functions from said application layer of said processor and communicate with said application layer; and
(c) a computer readable program device configured to provide a plurality of data flow paths for said data acquisition and delivery functions to devices hardware.

51. The computer implemented electronic information acceleration device of claim 50 wherein said computer readable program devices are disposed on a memory device.

52. The computer implemented electronic information acceleration device of claim 51 wherein said memory device is a disk.

53. The computer implemented electronic information acceleration device of claim 51 wherein said disk is a CD-ROM.

54. The computer implemented electronic information accelerator device of claim 51 wherein said disk is an optical laser disk.

55. The computer implemented electronic information acceleration device of claim 51 wherein said memory device is a chip.

56. The computer implemented electronic information acceleration device of claim 50 further comprising a computer readable program device configured to convert data received from said application layer of said processor into a common format.

57. The computer implemented electronic information acceleration device of claim 56 wherein said computer readable program devices are disposed on a memory device.

58. The computer implemented electronic information acceleration device of claim 50 further comprising a computer readable program device configured to balance the flow of data inputs and outputs between said plurality of data flow paths.

59. The computer implemented electronic information acceleration device of claim 58 wherein said computer readable program devices are disposed on a memory device.

60. The computer implemented electronic information acceleration device of claim 50 further comprising a computer readable program device configured to provide a cache.
